(19) Europäisches Patentamt
European Patent Office
Office européen des brevets

(11)  **EP 2 997 827 B1**

(12)  **EUROPEAN PATENT SPECIFICATION**

(45) Date of publication and mention
of the grant of the patent:
**27.02.2019 Bulletin 2019/09**

(51) Int Cl.:
**A21D 2/18** *(2006.01)*  **A21D 2/26** *(2006.01)*
**A21D 2/36** *(2006.01)*  **A21D 13/02** *(2006.01)*

(21) Application number: **14184662.6**

(22) Date of filing: **12.09.2014**

(54) **Healthy biscuit**

Gesundes Gebäck

Biscuit sain

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2016 Bulletin 2016/12**

(73) Proprietors:
• **Generale Biscuit**
**92140 Clamart (FR)**
• **INSTITUT NATIONAL DE LA RECHERCHE
AGRONOMIQUE**
**75338 Paris (FR)**
• **Institut des Sciences et Industries du Vivant et
de l'Environnement**
**75005 Paris (FR)**

(72) Inventors:
• **AYMARD, Pierre**
**92140 Clamart (FR)**

• **VILLEMEJANE, Cindy**
**75005 Paris (FR)**
• **BERLAND, Sophie**
**75005 Paris (FR)**
• **MICHON, Camille**
**75005 Paris (FR)**

(74) Representative: **Boult Wade Tennant LLP
Verulam Gardens
70 Gray's Inn Road
London WC1X 8BT (GB)**

(56) References cited:
**CN-B- 102 783 610    US-A1- 2005 058 759
US-B1- 6 610 347**

Remarks:
The file contains technical information submitted after
the application was filed and not included in this
specification

EP 2 997 827 B1

**Description**

The present disclosure relates to a healthy biscuit product which contains high levels of protein and fibers, sufficient to promote a feeling of fullness or satiety and to permit nutritional claims, such as being a "source" or "rich in" protein and/or fibers. In particular, the disclosure provides a dough and a method for forming the dough which allows for an increased content of fiber and protein, without compromising the handling characteristics of the dough.

Proteins are an important nutritional component of a healthy well balanced diet. During digestion, proteins are broken down into smaller polypeptide chains and amino acids which are then used to generate new proteins. Some amino acids are called "essential", because they cannot be biosynthesized by the body and have to be found in food. Proteins are available from meat, fish and eggs, as well as from whole grains, pulses, legumes, soy, dry fruits, nuts and seeds. It is known in the art that protein is useful for increasing the satiety provided by food products.

It is also known that fiber is an important nutritional component of a healthy well balanced diet. Dietary fibers are carbohydrates with a degree of polymerization larger than 3 that are neither absorbed nor digested in the small intestine. They form a broad class of materials, from oligosaccharides to complex plant cell walls. Dietary fibres are usually separated in 3 main types, depending on their functional properties:

a) insoluble fibres, such as resistant starches and plant cell wall polysaccharides found in grains, vegetable and fruits;
b) non-viscous soluble fibers, which are mostly oligosaccharides, including fructo-oligosaccharides, resistant dextrins and polydextrose; and
c) viscous soluble fibers, which are polysaccharides with an extended conformation in solution, such as soluble beta-glucan from oat, guar gums and other viscous gums.

Dietary fibers have many physiological benefits, among which are lowering of blood glucose response, reducing cholesterol, improving transit and regularity, and promoting satiety. Fiber intake in many countries is below recommended levels, so there is a desire to increase the fiber content of food products.

US6610347B1 discloses a fibre-enriched dough composition and a baked product obtained with said dough, but wherein the dough contains whey protein which has been denatured before dough-making. WO2010046492 discusses the benefits of increasing the fiber content of biscuits and discusses a number of issues associated with increasing the fiber content. In particular, the inclusion of fibers can bind strongly to the water in the dough and affect the hydration of the dough.

EP2255663 discusses the use of a combination of denatured protein and fiber to increase the satiety experienced from a biscuit or cracker product.

Accordingly, there is a desire to provide an improved product which provides increased levels of protein and fibers, provides an increased satiety, tackles the problems associated with the prior art, or at least provides a useful commercial alternative thereto.

According to a first aspect there is provided a biscuit dough comprising:

protein in an amount of at least 8wt% by weight of the final biscuit;
fiber in an amount of from 5 to 20wt% by weight of the final biscuit;
sugar in an amount of from 5 to 25wt% by weight of the final biscuit;
wherein the dough comprises native whey protein in an amount of at least 0.5 wt% by weight of the dough, and wherein the fiber comprises viscous soluble fibers and/or insoluble fibers.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

By the term "biscuit", it is meant any baked cereal products, with a low moisture content (less than 5%, preferably less than 4%) and a crispy texture, made from a dough or a batter, which includes the commonly known biscuits, cookies, crackers, wafers and baked granola bars, preferably biscuits, cookies, crackers and wafers.

By the term "biscuit dough" it is meant a dough suitable for forming a biscuit when baked. Doughs are well known in the art and are typically formed from a mixture of dry ingredients and added water to make a workable mixture.

The dough comprises protein in an amount of at least 8wt% by weight of the final biscuit. That is, the dough includes sufficient protein such that, when baked to form a biscuit, the final biscuit includes at least 8wt% of protein. As will be appreciated, the baking process leads to a loss of water from the dough. Accordingly, a level of 8wt% protein in the biscuit is achieved by a slightly lower amount of protein by weight of the moist dough. The protein levels of the biscuit correlate to the level of protein in the dry ingredients.

The dough comprises fibers in an amount of from 5 to 20wt% by weight of the final biscuit. That is, the dough includes fiber such that, when baked to form a biscuit, the final biscuit includes at least 5 to 20wt% of fiber. As will be appreciated, the baking process leads to a loss of water from the dough. Accordingly, a level of 5wt% fiber in the biscuit is achieved by a slightly lower amount of fiber by weight of the moist dough. The fiber levels of the biscuit correlate to the level of fiber in the dry ingredients. Preferably the fiber is in an amount of from 10 to 16wt% by weight of the final biscuit.

The dough comprises native whey protein in an amount of at least 0.5 wt% by weight of the dough. Since the whey protein may be affected by the baking process, the level of native whey protein is characterised by weight of the dough. The dough includes the added water sufficient to make the dough workable.

By the term "native" it is meant that the protein has not been denatured. Methods of denaturing proteins are well known in the field of baking and include thermal treatments, often with steam or hot water. A native whey protein is one which retains the form and structure that it has in the original dairy source material. The native whey protein may be a spray-dried whey protein or have been subjected to a low temperature treatment, provided that the protein remains substantially in its native form.

The dough comprises fiber which comprises viscous soluble fibers and/or insoluble fibers. As discussed above, dietary fibres are usually separated in three main types, depending on their functional properties. The dough preferably comprises insoluble fibres, such as resistant starches and plant cell wall polysaccharides found in grains, vegetable and fruits; and/or viscous soluble fibers, which are high molar mass polysaccharides with an extended conformation in solution, such as soluble beta-glucan from oat, guar gums and other viscous gums. Preferably the dough does not comprise any (preferably less than 2wt% by weight of the biscuit, more preferably less than 1wt%, more preferably essential none) non-viscous soluble fibers, which are mostly oligosaccharides, such as fructo-oligosaccharides, resistant dextrins and polydextrose.

The inventors have found that it is difficult to incorporate additional fibers into biscuit doughs. This is especially the case for insoluble fibers and viscous soluble fibers. Without wishing to be bound by theory, it is considered that because of their high affinity for water, fibers tend to absorb the water added during mixing, preventing or delaying the formation of the dough. More water is required to form processable dough, especially with viscous soluble fibers. The dough texture also tends to evolve during resting time, becoming drier and harder because of water migration from the continuous phase to the fiber particles, which can only be addressed with further water.

While increased dough hydration can be used to make a dough more malleable, the inventors have found that the increased hydration has a number of disadvantages when preparing biscuits. In particular, the increase in dough hydration can make dough texture develop, requiring increased baking times and/or temperatures, which are costly and can lead to quality issues, such as excess of coloration, burnt off-tastes and checking. Increasing dough hydration also leads to enhanced starch gelatinization during baking, which increases glycaemic response, and thus lowers the nutritional interest of such protein-fiber enriched biscuits.

The inventors have further found that the same problems arise for proteins as for fibers. Accordingly, for a combination of dietary fibers with proteins there is such an increase in the required dough hydration that the dough pieces cannot be handled anymore during the process. This prevents reaching levels that may be efficient for nutrition ("rich in" proteins and/or fibers) or satiety claims.

As noted above, fibers and proteins are known to increase dough stiffness significantly. While one way to address this is to increase the hydration of the dough, the inventors were surprised to find that a very different behaviour was observed with native whey protein, in particular native whey protein concentrates and isolates. The inventors found that this native whey protein could be used to allow the dough hydration to be reduced, or when used in combination with fibers, it allowed the moisture content to be maintained or reduced while increasing the fiber content of the dough.

Examples of native whey proteins include native whey protein concentrate (WPC) or isolates (WPI), for instance Prolacta 80™ from Lactalis Ingredients or native whey protein isolate WPI 894™ from Fonterra. Without wishing to be bound by theory, one possible explanation is the high solubility of these proteins that readily dissolve in the added water during dough mixing, hence increasing the volume of the continuous phase (water and sugars) rather than forming partially hydrated swollen particles that would be part of the dispersed phase. The findings indicate that such highly soluble and non-viscous proteins (being native and non-aggregated) can be considered as dough plasticizer, similar to water and sugars.

Preferably the insoluble fibers comprise one or more of brans from cereal grains and/or fibers from fruits or vegetables. Preferably the cereal grains are selected from wheat, oat, barley and rye, or combinations of two or more thereof. Preferably the viscous soluble fibers comprise one or more of guar gum, tara gum, locust bean gum, fenugreek, xanthan, pectins, alginates, beta-glucans, glucomannans, konjac and psyllium.

Preferably the viscous soluble fibers and/or insoluble fibers comprise from 3 to 15wt% by weight of the dough. Preferably, these fibers form from 5 to 10wt% of the dough. These fibers are important to provide a feeling of fullness, satiation and/or satiety and other dietary benefits such as flattening blood glucose response, lowering blood cholesterol and improving regularity. Moreover, these fibers allow the production of a dough with desirable levels of hydration, despite high levels of fiber and protein in the biscuit.

Preferably the fiber comprises less than 2wt% non-viscous soluble fibers by weight of the final biscuit, preferably less than 2wt%. These fibers are easy to incorporate in biscuit dough, but their fermentation in the colon can generate some discomfort and limit gastrointestinal tolerance, especially in the case of a high fiber product, containing already insoluble and/or soluble viscous fibers.

Preferably the dough comprises added water in an amount of less than 25wt% by weight of the dough, more preferably less than 20wt%, and most preferably less than 15wt% by weight of the dough. Preferably the dough comprises added water in an amount of at least 12 wt%.

It is important to note that the water in the dough is the water added to form the dough. Trace amounts of moisture may be present, trapped in the ingredients used, and this is not included when considering the dough hydration, unless specified (see Examples 3 and 4)

Preferably the protein is in an amount of up to 25wt% by weight of the final biscuit, preferably about 14wt% by weight of the final biscuit. Preferably the protein is present in an amount of from 10 to 20wt%, more preferably in an amount of from 12 to 16wt% of the final biscuit. These levels of protein provide an improvement of the nutritional profile of the biscuits and/or advantageous satiation or satiety from the final biscuit.

The dough preferably contains at least 0.5wt % native whey proteins. The inventors found that there is an optimal dosage of native whey protein that corrects the effect of dietary fibers or other proteins and "restores" dough machinability. Preferably the native whey protein is in an amount of from 1 to 11wt% by weight of the dough. Below this critical dosage, the dough is too dry, too hard and not cohesive enough so that biscuit dough pieces do not resist transfer to the oven and break apart. More preferably the dough contains from 1.5 to 8wt% of native whey protein, more preferably from 2 to 6wt%.

Preferably the protein in the dough is below 25wt%, more preferably below 20wt%. Above this critical dosage, the dough becomes too sticky and dough pieces tend to deform and be incomplete after forming.

The dough comprises sugar in an amount of from 5 to 25wt%, preferably from 10 to 20wt%, by weight of the final biscuit. Preferably the dough comprises fat in an amount of from 5 to 25wt%, preferably from 10 to 20wt%, by weight of the final biscuit. Preferably the dough has a ratio by weight of sugar to fat of about 1:1. These levels of fat and sugar help to provide a cohesive dough, but also one which is nutritionally beneficial.

Preferably the dough comprises inclusions, preferably oat flakes, or any fragments of grains (such as cereals and pseudo-cereals), ancient grains (e.g. quinoa) or pulses (pea, chickpea, etc...) under the form of flakes, grits of crisps. These inclusions bring a combination of fibers and proteins, an appealing texture contrast and a natural/wholesome aspect to the finished product. Other inclusions such as chocolate drops or dried fruit pieces can also be incorporated.

Preferably the dough comprises flour and oat flakes in a ratio of flour to flakes of 1.5:1.

According to a further aspect there is provided a biscuit obtainable by shaping and baking the biscuit dough described herein. Shaping techniques, including rotary moulding, are well known in the art. Temperatures and conditions required for baking the dough composition to form a biscuit are well known in the art.

Preferably the biscuit has a water activity of less than 0.4. The water activity (Aw) of a product is a notion which is well known in the food industry field. This value measures the availability of water in a sample. In most cases, this water activity is not proportional to the water content of the product. Methods for measuring Aw of a product are known to the person skilled in the art. For example, it can be measured with an Aqualab CX-2 or series 3, or a Novasina. All Aw values indicated hereafter are measured at 25±0.1°C.

According to a further aspect there is provided a method for forming the biscuit dough described herein, the method comprising:

a) providing a liquid fat ingredient in a mixer,
b) adding dietary fibers to the liquid fat to coat the fibers;
c) mixing flour with the fat-coated fibers to form a mixture;
d) adding a sugar solution to the mixture to form a dough; and
e) optionally adding inclusions to the dough;

wherein native whey protein is introduced in step b or step c.

In a preferred example, the mixing process comprises:

a) Incorporating a liquid fat (for instance oil) in the mixer and solubilizing emulsifiers therein;
b) Dispersing the dietary fibers to coat them with fat/emulsifiers and mix for 30 seconds at low speed and 4.5 minutes at high speed;
c) Dissolving the sugars and BCA (ammonium bicarbonate) in the added water in order to obtain a homogeneous liquid (syrup-like);
d) Adding the rest of the powders -flour, salt and the other baking powders BCS (sodium bicarbonate) and SAPP (sodium acid pyrophosphate) - into the mixer
e) Adding the sugar solution and mix during 0.5 to 1 minute at medium speed.

f) Adding oat flakes and blend during 2 to 4 minutes at medium speed.

The proteins including native whey protein can be added either at step b) or step d). The criterion for duration of each phase is the texture of the dough and its homogeneity, assessed by the operator. This process is unusual because it requires pre-dissolving the sugars. If this is not done, the inventors found that native whey proteins solubilize before sugars, enter in competition for water and this prevents the solubilisation of sugars, giving a stiffer dough which is more difficult to process Preferably the sugar solution comprises all of the added sugar and water in the dough, and optionally further comprises ammonium bicarbonate.

This process of mixing used is not recommended in the prior art: the impact of the order of incorporation of the ingredients has been studied by Manohar and Rao (R.S. Manohar, P.H. Rao, Eur. Food Res. Technol. 1999, 210, 43-48) on short dough biscuits. The authors conclude that the most efficient method to reduce dough hydration is to make a "creaming" (i.e. dissolve sugars and disperse fat in water to form a water-based emulsion) and add the rest of the powders (including flour) after. This allowed to obtain dough with low hydration (16%), low elastic recovery (indicative of low gluten development), low cohesiveness, low adhesiveness and gave after baking the crispier biscuits. In contrast, the mixing method used herein, referred to by Manohar and Rao as "creaming followed by water and flour addition" was the least effective: dough has a significantly higher hydration (25%), elastic recovery, cohesiveness, adhesiveness and gave after baking biscuits with excessively higher thickness, porous crumb and hard texture. Therefore, the prior art does not recommend to favour the contact of flour with water.

Dissolving the sugars usually leads to an increase in the spread of the cookies and a correlated reduction in their thickness. Furthermore, it can give hard products which lack crispiness, as the fully dissolved sugars form a hard "glass" after baking instead of staying in the form of sugar crystals which act like "breakage points" and promote a crispy texture. It is however required herein, since the whey proteins otherwise prevents sugar dissolution by competing with sugars against the added water. This would not be expected based on conventional baking techniques.

Advantageously, the inventors have found that the method described herein allows during the mixing stage for the dough hydration to be comparable to standard dough (i.e. without any enrichment in fibers or proteins), at the forming stage for the yield and dough stability to be comparable to standard dough (without enrichment), and for the stack height of final biscuits to be similar to control biscuits (without enrichment).

Preferably the liquid fat ingredient is provided with one or more emulsifiers.

Preferably the flour is provided with other dry powder ingredients, preferably salt, and/or sodium bicarbonate and/or sodium acid pyrophosphate.

According to a further aspect there is provided a method for forming a biscuit from the dough of described herein, the method comprising the steps of:

(i) shaping the dough; and
(ii) baking the shaped dough.

Preferably the step of shaping the dough is a step of rotary moulding. Rotary moulding is particularly advantageous for shaping doughs with low moisture levels and containing inclusions. Alternatively forming techniques such as, laminating, sheeting or low shear extrusion can also be used, provided appropriate corrections in the mixing and dough hydration, well known by the man of the art.

Preferably the method further comprises a step of applying a glazing, coating and/or filling to the biscuit.

Preferably the method further comprises a step of packaging the cookie.

The product may optionally further comprise a coating. The filling may be provided within a biscuit product, between two or more biscuit products or as an overlying coating layer around at least an outer portion of a biscuit. That is, when there is only one biscuit, the filling part can be deposited wholly onto one surface thereof or partially on each surface. The filling part can also be deposited inside the biscuit. When there are two or more biscuits, the filling part may be layered between two biscuits to form a so-called sandwich biscuit.

A glazing can also be added before baking to control the final colour of the biscuit and give a shiny appearance.

According to a preferred aspect of the disclosure there is provided a biscuit dough comprising:

protein in an amount of at least 12wt% by weight of the final biscuit;
fiber in an amount of from 10 to 15wt% by weight of the final biscuit;
wherein the dough comprises native whey protein in an amount of at least 1 wt% by weight of the dough, and wherein the fiber comprises viscous soluble fibers and/or insoluble fibers.

The inventors have found that by combining specific dosage of native whey proteins with other proteins or texturing dietary fibers the dough processability can be maintained. This was surprising because the prior art recommends to denature and aggregate whey proteins as the best way to minimize their impact on dough processing. The prior art also often reports a shrinkage of such products when enriched in whey protein concentrates, while the inventors found the opposite for native whey proteins.

In particular, the inventors have found that a whey protein derived directly from cold milk (i.e. not previously heated) without heat-treatment has a preserved gelling ability. Without this protein, a high fiber dough is powdery and cannot be processed. The inventors have found an optimum amount of whey protein provides an ideally processable dough. Below this amount the dough is powdery, whereas above this amount the dough becomes too sticky for rotary-molding technology.

The present invention provides a number of particular advantages. These include a high fiber-high protein biscuits for satiety. Improvements for wholegrain products whereby the limit of dough hydration and dough stability may be improved. The whey protein also allows for a restored stack height and crispiness. In addition it is possible to provide high volume cookies with lots of inclusions (such as dry fruits).

According to a further aspect there is provided a biscuit comprising:

protein in an amount of at least 8wt% by weight;
fiber in an amount of from 5 to 20wt% by weight;
wherein the biscuit is obtainable by shaping and baking a dough comprising native whey protein in an amount of at least 0.5 wt% by weight of the dough, and wherein the fiber comprises viscous soluble fibers and/or insoluble fibers.

The disclosure will be described in relation to the non-limiting figures:

Figure 1 is a bar chart showing the percentage of added water for the different dough of Example 1.

Figure 2 is a bar chart showing the percentage of added water for the different dough of Example 2 containing both fibers (guar gum and oat bran) and native whey protein concentrates.

The disclosure will now be described with relation to the following non-limiting examples:

## Example 1

In this example, rotary moulded dough was enriched in proteins and hydration level required to obtain dough suitable for rotary moulding was monitored.

Proteins were added in order to reach about 23 of total proteins in biscuits after baking. Different proteins were used:

- Sodium caseinate = SC
- Native whey protein concentrate = WPC
- Milk protein concentrate containing about 80% of caseins and 20% of whey proteins on the total protein content = MPC
- Pea protein concentrate = PPC

Protein ingredients were added in replacement of flour in a control recipe. The amount of dry flour and proteins was kept equal to 1340 g. When added, proteins were kept constant on a dry basis and equal to 340 g. Other ingredients (fats, sugars, etc...) were kept constant in the dough. Water content of the dough was adjusted in order to have suitable dough for subsequent forming. The recipes of the dough enriched in proteins are described in Table 1.

**Table 1: dough recipes of Example 1.**

| Code | F1 | F2 | F3 | F4 | F5 |
|---|---|---|---|---|---|
| Formula | **Control** | SC | MPC | PPC | WPC |
| Flour (g) | **1340.0** | 1000.0 | 1000.0 | 1000.0 | 1000.0 |
| Sodium caseinate SC (g) | - | 340.0 | - | - | - |
| Milk proteins concentrate MPC (g) | - | - | 340.0 | - | - |
| Pea protein concentrate PPC (g) | - | - | - | 340.0 | - |
| Whey protein concentrate WPC (g) | - | - | - | - | 340.0 |
| Sugar (g) | **220.0** | 220.0 | 220.0 | 220.0 | 220.0 |

(continued)

| Code | F1 | F2 | F3 | F4 | F5 |
|------|------|------|------|------|------|
| Formula | **Control** | SC | MPC | PPC | WPC |
| Fats (g) | **218.0** | 218.0 | 218.0 | 218.0 | 218.0 |
| Emulsifier (g) | **8.4** | 8.4 | 8.4 | 8.4 | 8.4 |
| Salt (g) | **3.2** | 3.2 | 3.2 | 3.2 | 3.2 |
| Baking powders (g) | **30.0** | 30.0 | 30.0 | 30.0 | 30.0 |
| Water (g) | **240.0** | 895.0 | 690.0 | 560.0 | 200.0 |
| TOTAL(g) | **2059.6** | 2714.6 | 2509.6 | 2379.6 | 2019.6 |

The following manufacturing process was used. A VMI Phebus mixer of 10 kg capacity equipped with a flat beater paddle and operating at speeds ranging from 30 to 120 rpm was used.
Incorporation of the ingredients was done manually in the following steps:

a) Incorporate oil and emulsifiers in the mixer and blend for 1 minute at 30 rpm,
b) Disperse the proteins and mix for 30 seconds at 30 rpm and 4.5 minutes at 120 rpm.
c) Dissolve the sugars in the added water in order to obtain an homogeneous liquid (syrup-like) in which BCA (ammonium bicarbonate) is then dispersed,
d) Add the rest of the powders -flour, salt and the other baking powders BCS (sodium bicarbonate) and SAPP (sodium acid pyrophosphate) - into the mixer.
e) Add the sugar solution and mix during 2.5 to 4 minutes at 40 rpm.

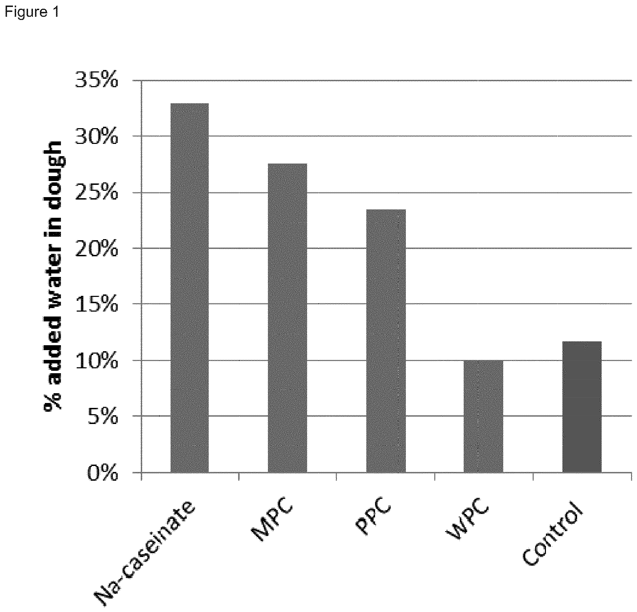

At the end of mixing, dough temperature was of 26.5±1.5°C. After mixing, dough was directly shaped (without resting time) using a lab-scale rotary moulding machine in order to assess dough technological behaviour.
The amount of added water and dough moisture required to obtain process able dough are reported in Table 2 and shown in Figure 1.

**Table 2: comparison between dough enriched in WPC and dough enriched with other types of proteins.**

| code | Type of proteins | Dough composition (% w/w) | | | | | Biscuit composition (% w/w) | |
|------|------------------|-----|------|-----|------|------------------|-----------------|------------|
| | | %SC | %WPC | %MP | %PPC | % Added water | % Total Fibers | % Proteins |
| F1 | Control | - | - | - | - | 11.6 | 5.6 | 10.7 |
| F2 | Sodium caseinate | 12.5 | - | - | - | 33.0 | 2.4 | 23.2 |
| F3 | Milk proteins concentrate | - | - | 13.6 | - | 27.6 | 2.4 | 23.4 |
| F4 | Pea proteins concentrate | - | - | - | 14.3 | 23.5 | 2.4 | 22.2 |
| F5 | Whey protein concentrate | - | 17.3 | - | - | 10.2 | 2.5 | 21.9 |

It was found that with all proteins except native whey protein concentrates (WPC), dough hydration had to be increased significantly, up to almost 3 fold vs control dough. Surprisingly, upon addition of WPC, it was possible to produce process able dough with a lower hydration than the control dough while maintaining dough machinability. Other dairy proteins such as sodium caseinate and milk protein concentrates (although containing 20% of WPC on dry basis), had a very different behaviour than native WPC.
Blending native whey proteins with other proteins, such as pea protein concentrates (PPC) and milk protein concentrates (MPC), gave a dough with an intermediate hydration requirement. For instance with a blend of 25% WPC and 75% PPC, it was required to add 18% water, which is between the value of 10.2% for WPC only and 23.5% for PPC only.

Summary of Example 1

A biscuit dough was enriched in proteins in order to reach about 23% of total proteins in biscuits after baking. Water content of the dough was adjusted in order to have suitable dough for forming using rotary moulding. Different protein ingredients were used: sodium caseinate, native whey protein concentrate, milk protein concentrate and pea protein concentrate. With all proteins except native WPC, it was required to increase dough hydration significantly, up to almost 3 fold vs control dough. Surprisingly, upon addition of WPC, it was possible to reduce dough hydration (vs control dough). Blending WPC with other proteins required intermediate values (i.e. between that of WPC and that of the other protein) of added water to have workable dough.

## Example 2

In this example, dough was enriched in both fibers and proteins and hydration level required to obtain dough suitable for rotary moulding was monitored.

Viscous soluble fibers, guar gum (GG) and oat bran (OB) were added in order to reach 12 of total dietary fibers (TDF) in biscuits after baking, including those from flour and flakes.

The protein ingredients were pea protein concentrate (PPC) and native whey protein concentrate (WPC). Proteins were added in order to reach 16% of total protein in biscuits, including those from flour and flakes.

Fibers and proteins were added in replacement of flour and flakes, keeping a constant flour/flakes ratio of 1.5:1. Sugar and fat contents were adjusted to remain at a constant value of 15% (each) in the biscuit after baking. Table 3 shows the dough recipes.

**Table 3: dough recipes of Example 2**

| Code | F6 | F7 | F8 | F9 | F10 | F11 | F12 |
|---|---|---|---|---|---|---|---|
| Formula | **Control** | GG | GG + PPC | GG + WPC | GG + PPC/ WPC | OB | OB + WPC |
| Flour | **39.1%** | 37.5% | 29.3% | 33.0% | 30.2% | 25.3% | 24.3% |
| Oat flakes | **26.1%** | 16.1% | 12.6% | 14.1% | 12.9% | 17.3% | 16.2% |
| Sugar | **11.2%** | 10.1% | 10.8% | 10.0% | 10.6% | 10.4% | 10.4% |
| Fats | **9.4%** | 9.5% | 9.8% | 10.6% | 10.0% | 8.7% | 9.5% |
| Emulsifiers | **0.4%** | 0.4% | 0.4% | 0.4% | 0.4% | 0.4% | 0.4% |
| Salt | **0.2%** | 0.1% | 0.1% | 0.2% | 0.1% | 0.2% | 0.2% |
| Whey protein concentrate | - | - | - | 10.5% | 2.4% | - | 6.7% |
| Pea protein concentrate | - | - | 9.4% | - | 7.2% | - | - |
| Guar gum | - | 7.8% | 8.5% | 9.5% | 8.7% | - | - |
| Oat bran | - | - | - | - | - | 14.9% | 16.7% |
| Baking powders | **1.5%** | 1.4% | 1.3% | 1.5% | 1.4% | 1.5% | 1.3% |
| Water | **12.2%** | 17.2% | 17.8% | 10.0% | 16.0% | 21.3% | 14.3% |
| TOTAL | **100%** | 100% | 100% | 100% | 100% | 100% | 100% |
| *GG: guar gum ; OB: oat bran ; WPC : whey protein concentrate; PPC: pea protein concentrate.* | | | | | | | |

The following manufacturing process was used. A Hobart mixer of 20 kg capacity equipped with a flat beater paddle and operating at 3 speeds, from 1 (low) to 3 (high) was used.

Incorporation of the ingredients was done manually as follows:

a) Incorporate oil and emulsifiers in the mixer and blend the two for 1 minute at medium speed,

b) Disperse the dietary fibers and the proteins and mix for 30 seconds at low speed and 4.5 minutes at high speed.

c) Dissolve the sugars in the added water in order to obtain an homogeneous liquid (syrup-like) in which BCA (ammonium bicarbonate) is dispersed,

d) Add the rest of the powders -flour, salt and the other baking powders BCS (sodium bicarbonate) and SAPP (sodium acid pyrophosphate)- into the mixer

e) Add the sugar solution and mix during 0.5 to 1 minute at medium speed.

f) Add oat flakes and blend during 2 to 4 minutes at medium speed.

At the end of mixing, the dough temperature was of 26±2°C. After mixing, the dough was shaped using a pilot plant rotary moulding, in order to assess dough technological behaviour.

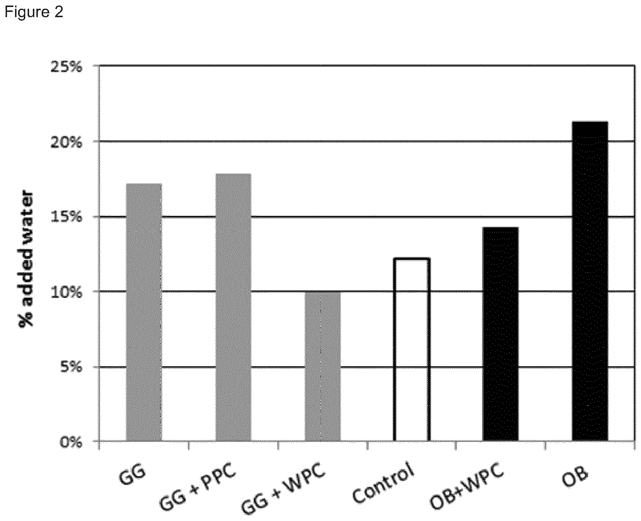

The amount of added water and dough moisture required to obtain process able dough are reported in Table 4 and shown in Figure 2.

**Table 4: composition of dough and finished products of Example 2**

| Code | Formula | Biscuit Dough composition (% w/w) composition (% w/w) | | | | | |
|---|---|---|---|---|---|---|---|
| | | %GG | %WPC | %PPC | %added water | %TDF | %proteins |
| **F6** | **Control** | **0** | **0** | **0** | **12.2** | **4.2** | **8.5** |
| F7 | GG | 7.9 | 0 | 0 | 17.2 | 11.7 | 7.8 |
| F8 | GG + PPC | 8.5 | 0 | 9.4 | 17.8 | 12.1 | 16.0 |
| F9 | GG + WPC | 9.5 | 10.5 | 0 | 10.0 | 12.4 | 15.9 |
| F10 | GG + PPC/WPC | 8.7 | 2.4 | 7.2 | 16.0 | 12.2 | 16.0 |
| F11 | OB | 14.6 | 0 | 0 | 21.3 | 12.3 | 10.4. |
| F12 | OB + WPC | 16.7 | 6.7 | 0 | 14.3 | 12.3 | 15.8 |
| *\*GG: guar gum ; OB: oat bran ; WPC : whey protein concentrate; PPC: pea protein concentrate.* | | | | | | | |

As demonstrated in this example, increasing fibres (guar gum GG or oat bran OB) or pea protein contents (PPC) required increasing dough hydration significantly. 13.. However, adding native WPC to GG and OB-enriched dough allowed reducing significantly dough hydration down to 10% for guar gum-biscuit (F9) and 14% for oat bran (F12). These dough hydration values are close to that of the Control dough, which is unexpected for dough containing 12% fibers and 16% protein.

Blending PPC and WPC again showed an intermediate behaviour compared to PPC and WPC alone. Biscuit F10 is both enriched in guar gum (12%) and proteins (16%). The ratio of WPC to PPC is 1:4 and dough hydration requirement is 16.0%.

This example demonstrates that adding WPC, preferentially to any other source of proteins reduces the hydration requirement of fiber and protein-rich doughs while maintaining dough machinability.

**Table 5: dimensions of the biscuit of Example 2.**

| Formula | | Average ± standard deviation | | |
|---|---|---|---|---|
| | | Length L (mm) | Width w (mm) | Stack height of 10 biscuits (mm) |
| **F6** | **Control** | **79.4 ± 0.7** | **45.5 ± 0.2** | **78.3** |
| F7 | GG | 76.8 ± 0.6 | 44.8 ± 0.4 | 76.9 |
| F8 | GG + PPC | 76.9 ± 0.4 | 43.3 ± 0.3 | 64.5 |
| F9 | GG + WPC | 80.7 ± 0.4 | 46.1 ± 0.3 | 107.7 |
| F10 | GG + PPC/WPC | 78.0 ± 0.7 | 44.4 ± 0.3 | 75.5 |
| F11 | OB | 77.6 ± 0.6 | 43.8 ± 0.2 | 70.0 |
| F12 | OB + WPC | 76.9 ± 0.4 | 43.4 ± 0.4 | 76.0 |

Adding dietary fibers led to a significant shrinkage of the biscuits, especially significant on the stack height. This shrinkage was even increased upon addition of pea protein concentrates (PPC). However, using native whey protein concentrates WPC in combination with fibers allowed to obtain the dimensions close to control biscuit (especially length and width) or even increased, especially the stack height. The increased stack height observed for the biscuits containing fibers and WPC could offer the opportunity to decrease the use of the baking powders, especially BCA, in order to match precisely the dimensions of the control biscuit. This type of correction is known by the person skilled in the art.

Note that the use of WPC slightly increased the spread of the biscuits (higher length, higher width) as well as the stack height. This is an unusual behaviour: most ingredients that increase spreading (like sugars, fats) also decrease biscuit thickness.

The sensory properties of the biscuits of Example 2 were analysed by a trained Panel of 12 volunteers. Texture attributes of the biscuits are reported in Table 6.

Table 6: average values of the sensory attributes evaluated by a panel composed of 13 judges.

| | Formula | Friability | Crispiness | Lightness | Stickiness | Melting | Hardness |
|---|---|---|---|---|---|---|---|
| F6 | Control | 36.6 | 29.4 | 31.8 | 34.2 | 23.4 | 18.9 |
| F7 | GG | 34.8 | 30.0 | 31.3 | 36.9 | 20.8 | 21.9 |
| F8 | GG + PPC | 35.0 | 28.0 | 27.5 | 34.6 | 21.6 | 19.8 |
| F9 | GG + WPC | 36.7 | 40.1 | 37.5 | 30.8 | 25.7 | 29.2 |
| F10 | GG+PPC/WPC | 35.9 | 31.7 | 29.0 | 28.5 | 22.4 | 22.5 |

On some attributes, such as friability or melting, the addition of WPC counter-balanced the impact of dietary fibers, so that the fibers-WPC biscuits were closer to the control than the fiber-enriched biscuits. The use of WPC also resulted in an increase in crispiness, lightness vs the control product, which can be considered as positive for the mouthfeel.

Summary of example 2

Biscuit dough was enriched in viscous soluble fibers (guar gum and oat bran) and proteins (pea protein concentrates and native whey protein concentrates) in order to reach 12% total dietary fibers and 16% of total proteins in biscuits after baking. Water content of the dough was adjusted in order to have suitable dough for forming using rotary moulding.

It was found that incorporating viscous soluble fibers required a significant increase in the dough hydration. This requirement further increased when pea protein concentrates were added to the fiber-enriched dough. However, it was counter-balanced by addition of native whey protein concentrate. Dough containing both viscous soluble fibers and native whey protein concentrates could be made at the same dough hydration as the control (without protein or fiber addition) and had the same technological behaviour. This greatly facilitates the production of high fibers and high protein biscuits.

**Example 3**

In this example, the dosage of native whey protein concentrates (WPC) was adapted in a fiber-enriched dough such as to obtain processable dough with the same hydration as the control dough. In this case, the total dough moisture is considered, i.e. added water as well as the residual moisture from the raw materials.

Several dietary fibers were used and incorporated in order to reach 10% of 20% of total dietary fibers (including those from flour and flakes) in the finished product:

- wheat bran (WB) containing insoluble fibers
- guar gum (GG) containing viscous soluble fibers
- oat bran (OB) containing both insoluble and viscous beta-glucans soluble fibers.

The amount of whey proteins (WPC) was progressively increased, in replacement of flour and flakes, keeping a constant flour/flakes ratio of 1.5:1. Sugar and fat contents were adjusted to remain at a constant value of 15% each in the biscuit after baking.

Table 7 describes the dough formula with wheat bran and WPC enrichment for a TDF target of 20%.

**Table 7: dough recipes enriched in wheat bran (WB) and containing increasing contents of WPC**

| Code | F13 | F14 | F15 | F16 |
|---|---|---|---|---|
| Formula | WB | WB + WPC | WB + WPC | WB + WPC |
| Flour (g) | 408.0 | 356.0 | 308.0 | 262.0 |
| Oat flakes (g) | 272.0 | 236.0 | 204.0 | 172.0 |
| Sugar (g) | 250.0 | 236.0 | 222.0 | 208.0 |
| Fats (g) | 204.0 | 202.0 | 200.0 | 200.0 |
| Emulsifiers (g) | 8.4 | 8.4 | 8.4 | 8.4 |
| Salt (g) | 3.2 | 3.2 | 3.2 | 3.2 |
| **Whey protein concentrate** (g) | - | **68.0** | **134.0** | **198.0** |
| Wheat bran (g) | 670.0 | 670.0 | 670.0 | 670.0 |
| Water (g) | 310.0 | 310.0 | 310.0 | 310.0 |
| Baking powders (g) | 30 | 30 | 30 | 30 |
| TOTAL (g) | 2155.6 | 2119.6 | 2089.6 | 2061.6 |
| Dough moisture (%) | 22.5% | 22.5% | 22.5% | 22.5% |
| TDF (% in biscuit) | 20% | 20% | 20% | 20% |
| WPC (% in biscuit) | 0% | 4% | 8% | 12% |

The manufacturing process described in Example 2 was used. At the end of mixing, the dough temperature was of 29±2°C.

During and just after mixing, the dough "texture" and aspect were evaluated in order to assess dough machinability.

- Without WPC, no workable dough can be obtained at this hydration level. The dough is too powdery and is not suitable for rotary moulding.
- At 4% WPC, the dough is more cohesive but still has a low cohesiveness and a low stability, i.e. the texture of the dough evolves over time in the typical time scale of biscuit processing (1 hour). It is considered as non-workable but close to the acceptable domain.
- At 8% WPC, the dough was workable and slightly too cohesive.
- At 12% WPC, the dough was too sticky and not appropriate for forming using rotary moulding technology.

The same methodology was applied for all fibers described above, at 10% and 20% total dietary fiber content.

Table 8 summarizes the amount of WPC that needs to be added to obtain workable dough with the same hydration as the control one. This amount depends on the type of dietary fibers but as shown in table 8, whatever the amount and type of dietary fibers incorporated, there is a dosage of WPC that allows having the same hydration as the control dough.

**Table 8: values of the native WPC by weight of the final biscuit required to obtain workable dough at the same dough hydration than the control dough.**

| FIBRES | 10% of total fibres in the biscuit | 20% of total fibres in the biscuit |
|---|---|---|
| Oat bran | 5% WPC (± 1%) | |
| Wheat bran | 0.5% WPC (± 0.2%) | 5% WPC (± 1%) |
| Guar gum | 3% WPC (± 0.5%) | 10% WPC (± 1%) |

Summary of example 3

Biscuit dough was enriched in both fibers (soluble viscous or insoluble such as guar gum, oat bran and wheat bran) and native whey proteins. Fibers were added such as to obtain a total fibers content in the final biscuit of 10% and 20%. Native whey protein concentrates were incorporated in increasing amount, from 0.5% to 12%, and the impact of this addition on dough process ability was monitored for the different fibers.

It was found that for any given dough (fiber content and type), there was an optimum dosage of native whey protein concentrate at which it was possible to obtain a dough with the same hydration and process ability as the control dough. Below this dosage of WPC, the dough was too dry and not suitable for rotary moulding. Above this dosage of WPC, the dough was too sticky and cohesive, making it again not suitable for rotary moulding.

## Example 4

In this example, amount of fibers, native whey concentrate and added water were fixed. The different dough generated were evaluated at pilot scale for their technological behaviour and especially yield and processing stability.

Dough formulas were enriched in both fibers and native whey protein concentrates. Same dietary fibers as in the Example 3 (wheat bran, guar gum and oat bran) were incorporated in biscuit dough in order to reach 10% of 20% of total dietary fibers (including those from flour and flakes) in the finished product. Native whey protein concentrates were incorporated at relatively limited amount (vs other Examples) in replacement of flour and flakes, keeping a constant flour/flakes ratio of 1.5. Sugar and fat contents were adjusted to remain at a constant value of 15% each in the biscuit after baking. Total dough moisture was set at fixed values (20%, 22.5%, 25% and 28%) and processing ability was evaluated. The recipes of the dough enrich in WPC and oat bran, guar gum and wheat bran are respectively given in Tables 9, 10, 11.

**Table 9: dough and biscuit composition using oat bran and native whey protein concentrate enrichment.**

| Code | F17 | F18 | F19 | F20 | F21 | F22 | F23 | F24 | F25 |
|---|---|---|---|---|---|---|---|---|---|
| Formula | Control | OB | OB+WP C | OB | OB+WP C | OB | OB | OB+WP C | OB |
| Flour (g) | 5628.0 | 4704.0 | 4284.0 | 4704.0 | 4368.0 | 4704.0 | 2688.0 | 1652.0 | 2688.0 |
| Oat flakes (g) | 3752.0 | 3136.0 | 2856.0 | 3136.0 | 2912.0 | 3136.0 | 1792.0 | 1092.0 | 1792.0 |
| Sugar (g) | 1624.0 | 1680.0 | 1596.0 | 1680.0 | 1596.0 | 1680.0 | 1792.0 | 1498.0 | 1792.0 |
| Fats (g) | 1358.0 | 1386.0 | 1400.0 | 1386.0 | 1400.0 | 1386.0 | 1442.0 | 1428.0 | 1442.0 |
| Emulsifiers (g) | 58.8 | 58.8 | 58.8 | 58.8 | 58.8 | 58.8 | 58.8 | 58.8 | 58.8 |
| Salt (g) | 22.4 | 22.4 | 22.4 | 22.4 | 22.4 | 22.4 | 22.4 | 22.4 | 22.4 |
| WPC (g) | - | - | 588.0 | - | 469.0 | - | - | 1428.0 | - |
| Oat bran (g) | - | 1554.0 | 1638.0 | 1554.0 | 1638.0 | 1554.0 | 4970.0 | 5040.0 | 4970.0 |
| Water (g) | 1785.0 | 1568.0 | 1610.0 | 2030.0 | 2058.0 | 2520.0 | 2926.0 | 2926.0 | 3584.0 |
| Baking powders(g) | 210.0 | 210.0 | 210.0 | 210.0 | 210.0 | 210.0 | 210.0 | 210.0 | 210.0 |
| TOTAL (g) | 14438.2 | 14319.2 | 14263.2 | 14781.2 | 14732.2 | 15271.2 | 15901.2 | 15355.2 | 16559.2 |
| Dough moisture | 20% | 20% | 20% | 22.5% | 22.5% | 25% | 25% | 25% | 28% |
| TDF (% in biscuit) | 5.2% | 10.0% | 10.0% | 10.0% | 10.0% | 10.0% | 20.0% | 20.0% | 20.0% |
| total proteins (% in biscuit) | 8.7% | 9.8% | 13.1% | 9.8% | 12.5% | 9.8% | 12.0% | 20.0% | 12.0% |

**Table 10: dough and biscuit composition using guar gum and native whey protein concentrate enrichment.**

| Code | F17 | F26 | F27 | F28 | F29 | F30 | F31 | F32 | F33 | F34 | F35 |
|---|---|---|---|---|---|---|---|---|---|---|---|
| Formul a | Contr ol | GG | GG+ WPC | GG | GG+ WPC | GG | GG | GG+ WPC | GG | GG+ WPC | GG |
| Flour (g) | 5628.0 | 5124 | 4872 | 5124 | 4872 | 5124 | 4200.0 | 3402.0 | 4200.0 | 3402.0 | 4200.0 |
| Oat flakes (g) | 3752.0 | 3416 | 3248 | 3416 | 3248 | 3416 | 2800.0 | 2268.0 | 2800.0 | 2268.0 | 2800.0 |
| Sugar (g) | 1624.0 | 1624 | 1554 | 1624 | 1554 | 1624 | 1666.0 | 1442.0 | 1666.0 | 1442.0 | 1666.0 |
| Fats (g) | 1358.0 | 1386 | 1386 | 1386 | 1386 | 1386 | 1456.0 | 1456.0 | 1456.0 | 1456.0 | 1456.0 |
| Emulsif (g) | 58.8 | 58.8 | 58.8 | 58.8 | 58.8 | 58.8 | 58.8 | 58.8 | 58.8 | 58.8 | 58.8 |
| Salt (g) | 22.4 | 22.4 | 22.4 | 22.4 | 22.4 | 22.4 | 22.4 | 22.4 | 22.4 | 22.4 | 22.4 |
| WPC (g) | - | - | 343 | - | 343 | - | - | 1148.0 | - | 1148.0 | - |
| Guar gum (g) | - | 784 | 812 | 784 | 812 | 784 | 2436.0 | 2478.0 | 2436.0 | 2478.0 | 2436.0 |
| Water (g) | 1785.0 | 1386 | 1400 | 1834 | 1848 | 2324 | 1862.0 | 1890.0 | 2366.0 | 2366.0 | 2982.0 |
| Bak. powd. (g) | 210.0 | 210.0 | 210.0 | 210.0 | 210.0 | 210.0 | 210.0 | 210.0 | 210.0 | 210.0 | 210.0 |
| TOTAL (g) | 14438.2 | 14011.2 | 13906.2 | 14459.2 | 14354.2 | 14949.2 | 14711.2 | 14375.2 | 15215.2 | 14851.2 | 15831.2 |
| Dough moistur e | 20% | 20% | 20% | 22.5% | 22.5% | 25% | 22.5% | 22.5% | 25% | 25% | 28% |
| TDF (% in biscuit) | 5.2% | 10.0% | 10.0% | 10.0% | 10.0% | 10.0% | 20.0% | 20.0% | 20.0% | 20.0% | 20.0% |
| Total prot. (% in biscuit) | 8.7% | 8.3% | 10.2% | 8.3% | 10.2% | 8.3% | 7.3% | 13.7% | 7.3% | 13.7% | 7.3% |

**Table 11: dough and biscuit composition using wheat bran and native whey protein concentrate enrichment.**

| Code | F17 | F36 | F37 |
|---|---|---|---|
| Formula | Control | WB | WB+WPC |
| Flour (g) | 5628.0 | 4746.0 | 4746.0 |
| Oat flakes (g) | 3752.0 | 3164.0 | 3164.0 |
| Sugar (g) | 1624.0 | 1666.0 | 1666.0 |
| Fats (g) | 1358.0 | 1386.0 | 1414.0 |
| Emulsifiers (g) | 58.8 | 58.8 | 58.8 |
| Salt (g) | 22.4 | 22.4 | 22.4 |
| Whey protein concentrate (g) | - | - | 119.0 |
| Wheat bran (g) | - | 1484.0 | 1512.0 |
| Water (g) | 1785.0 | 1960.0 | 1526.0 |
| Baking powders (g) | 210.0 | 210.0 | 210.0 |
| TOTAL (g) | 14438.2 | 14697.2 | 14438.2 |
| Dough moisture | 20% | 22.5% | 20.0% |
| TDF (% in biscuit) | 5.2% | 10.0% | 10.0% |
| Total proteins (% in biscuit) | 8.7% | 9.1% | 9.8% |

The following manufacturing process was used. Processing parameters (mixing, rotation speed of the rotary moulding machine, baking profile, etc...) were kept constant for all experiments.

Mixing was performed in a Perkins Guitlard horizontal drum mixer of 20 kg capacity and operating at speeds ranging from low to high. Incorporation of the ingredients was done manually as follows:.

a) Incorporate oil and emulsifiers in the mixer and blend the two for 1 minute at medium speed,
b) Disperse the dietary fibers and the proteins (when added) and mix for 30 seconds at low speed and 4.5 minutes at high speed.
c) Dissolve the sugars in the added water in order to obtain an homogeneous liquid (syrup-like) in which BCA (ammonium bicarbonate = baking powder) is dispersed,
d) Add the rest of the powders -flour, salt and the other baking powders BCS (sodium bicarbonate) and SAPP (sodium acid pyrophosphate) - into the mixer
e) Add the sugar solution and mix during 0.5 to 1 minute at medium speed.
f) Add oat flakes and blend during 2 to 4 minutes at medium speed.

At the end of mixing, the dough temperature was of 23±1°C. The dough was then left at rest for 15 minutes, after which it was formed using a pilot scale R-Tech 300 mm rotary moulding machine. Each recipe was run over a 50 minutes period, during which the rotary moulding was operating during 2 minutes, followed by a stop of 5 minutes. This allowed a batch of 15kg of dough to be run during almost 1 hour, which is the order of magnitude of industrial processing.

The biscuit were then baked using a Imaforni continuous oven and collected for analysis. The baked biscuits were then collected for each of the 2 minutes run period and analysed with respect to their aspect. The number-based proportion of acceptable product (without noticeable defects) vs unacceptable products (broken or incomplete products) was referred to as the yield (Equation below). The evolution of this proportion of acceptable products vs processing time was taken as an indicator of dough stability.

$$Yield\,(t) = 100 \cdot \frac{Mass\ of\ acceptable\ baked\ biscuits\ (t)}{Mass\ of\ acceptable\ baked\ biscuits\ (t) + Mass\ of\ unacceptable\ baked\ biscuits\ (t)}$$

For each of these experiments, the following parameters were extracted from the curves:

- The "average yield" over the 50 min processing period. The machinability was rated according to the average yield values:

  ◦ From 0 to 50% average yield: Bad technological behaviour
  ◦ From 50 to 75% average yield: Acceptable technological behaviour
  o Above 75% average yield: Good technological behaviour

  Note that because of the methodology used (regular stops of the rotary moulding machine after 2 minutes of run) the yield was intrinsically underestimated and should not be compared with yield obtained on an industrial line running continuously.
- A "stability time", corresponding to the period during which the yield is of at least 75% of the maximum yield.

The average yield and stability time for the different formulas of Example 4 are given in Table 12 (formula with 10% dietary fibers in the finished product) and 13 (formula with 20% dietary fibers in the finished product). NB: OB=oat bran ; GG=guar gum; WB=wheat bran ; WPC=native whey protein concentrates.

**Table 12: Dough composition and yield indicators for dough enriched in fibres and WPC (total dietary fibre content of 10% in the finished product).**

| Code | Formula | Dough composition (% w/w) | | | | Technological behaviour | | |
|---|---|---|---|---|---|---|---|---|
| | | Fiber type | % Fiber | %WPC | % Dough moisture | Av. yield % | Machinability | Stability time (min) |
| F17 | Control | - | | 0 | 20 | 80 | Good | 42 min |
| F18 | OB | OB | 10.9 | 0 | 20 | 0.6 | Bad | 0 min |
| F19 | OB + WPC | OB | 11.5 | 4.1 | 20 | 28.5 | Bad | 0 min |
| F20 | OB | OB | 10.5 | 0 | 22.5 | 36.5 | Bad | 7 min |
| F21 | OB + WPC | OB | 11.1 | 3.2 | 22.5 | 75.1 | Good | 42 min |
| F22 | OB | OB | 10.2 | 0 | 25 | 63.5 | Acceptable | 14 min |
| F26 | GG | GG | 5.6 | 0 | 20 | 20.8 | Bad | 0 min |
| F27 | GG + WPC | GG | 5.8 | 2.5 | 20 | 42.3 | Bad | 14 min |
| F28 | GG | GG | 5.4 | 0 | 22.5 | 19.6 | Bad | 0 min |
| F29 | GG + WPC | GG | 5.7 | 2.4 | 22.5 | 88.8 | Good | 42 min |
| F30 | GG | GG | 5.2 | 0 | 25 | 42.1 | Bad | 7 min |
| F36 | WB + WPC | WB | 10.5 | 0.8 | 20 | 80.6 | Good | 35 min |
| F37 | WB | WB | 10.1 | 0 | 22.5 | 46.0 | Bad | 0 min |

## Table 13 : Dough composition and yield indicators for dough enriched in fibres and native WPC for a total dietary fibre content of 20% in the finish product.

| Code | Formula | Dough composition (% w/w) | | | | Technological behaviour | | |
| | | Fiber type | %Fiber | %WPC | % Dough moisture | Average Yield (%) | Machinability | Stability time (min) |
|---|---|---|---|---|---|---|---|---|
| F17 | Control | - | | 0 | 20 | 80 | Good | 42 min |
| F23 | OB | OB | 31.3 | 0 | 25 | 0.0 | Bad | 0 min |
| F24 | OB+WPC | OB | 32.8 | 9.3 | 25 | 67.1 | Acceptable | 21 min |
| F25 | OB | OB | 30.0 | 0 | 28 | 49.8 | Bad | 0 min |
| F31 | GG | GG | 16.6 | 0 | 22.5 | 0.0 | Bad | 0 min |
| F32 | GG+WPC | GG | 17.2 | 8.0 | 22.5 | 16.1 | Bad | 0 min |
| F33 | GG | GG | 16.0 | 0 | 25 | 7.7 | Bad | 0 min |
| F34 | GG+WPC | GG | 16.7 | 7.7 | 25 | 88.6 | Good | 42 min |
| F35 | GG | GG | 15.4 | 0 | 28 | 33.3 | Bad | 7 min |

Addition of insoluble or viscous dietary fibers dramatically decreases dough stability, as seen by the drop in average yield and stability time. This situation cannot completely be solved by increasing dough hydration, which is the typical correction that the man of the art would perform: for instance formula F22, enriched in oat bran, had a poorer performance than the control formula (F17) in spite of a 25% increase in moisture content (i.e. 25% for F22 vs 20% for F17).

Adding native whey protein concentrates allows correcting the impact of fiber enrichment. Both the average yield and dough stability are improved. For instance, adding native WPC to formula F22 (to give formula F21) gave dough of same performance as the Control dough and only a limited dough hydration increase (+12.5%).

Adding native WPC hence appears as a way to restore technological performance of high fibers dough, while contribution to obtain high fibers and high protein healthy biscuits (with limited sugar and fat content).

The biscuits dimensions are reported in Table 14.

### Table 14: biscuits dimensions for dough with an acceptable or good machinability

| Code | % Dough moisture | %TDF in biscuits | % WPC | Formula | Average Height (mm) | Difference of height vs control (%) |
|---|---|---|---|---|---|---|
| F17 | 20% | 5.2% | 0% | Control | 8.3 ± 0.2 | 0% |
| F21 | 22.5% | 10% | 3.2% | OB + WPC | 8.3 ± 0.1 | 0% |
| F22 | 25% | 10% | 0% | OB | 7.4 ± 0.1 | -11% |
| F29 | 22.5% | 10% | 2.4% | GG + WPC | 7.8 ± 0.1 | -6% |
| F30 | 25% | 10% | 0% | GG | 7.2 ± 0.1 | -13% |
| F36 | 22.5% | 10% | 0% | WB | 7.5 ± 0.1 | -10% |
| F37 | 20% | 10% | 0.8% | WB + WPC | 8.3 ± 0.1 | 0% |
| F24 | 25% | 20% | 9.3% | OB + WPC | 7.8 ± 0.1 | -6% |
| F25 | 28% | 20% | 0% | OB | 7.3 ± 0.1 | -12% |
| F34 | 25% | 20% | 7.7% | GG + WPC | 7.8 ± 0.1 | -6% |

(continued)

| Code | % Dough moisture | %TDF in biscuits | % WPC | Formula | Average Height (mm) | Difference of height vs control (%) |
|------|------------------|------------------|-------|---------|---------------------|-------------------------------------|
| F35 | 28% | 20% | 0% | GG | 7.9 ± 0.1 | -5% |

Adding dietary fibers reduces the stack height of baked biscuit, which is a well-known issue in the prior art.

Adding WPC together with dietary fibers allow to counter-balance this negative effect of fibers and restore a stack height value close to that of the control biscuit (same height or less than 6% difference).

Summary of example 4

Biscuit dough was enriched in both fibers (soluble viscous or insoluble such as guar gum, oat bran and wheat bran) and native whey proteins, similar to Example 3. Fibers were added such as to obtain a total fibers content in the final biscuit of 10% and 20%. Native whey protein concentrates were incorporated in increasing amount, from 0% to 9.3%. Dough moisture was set at fixed values (20%, 22.5%, 25% and 28%) and processing ability of the different dough was evaluated with a focus on stability and yield. For this purpose, a pilot scale rotary moulding line was operated by sequence of 2 minutes, followed by a stand-by of 5 minutes, during a total time of 50 minutes (resting time of 8 minutes followed by 6 running periods). The yield was evaluated visually for the different sequences by monitoring the proportion of well-designed biscuits vs incomplete or broken ones after baking. As a reference, the control dough (without protein and fibers added) had a moisture content of 22.5% and a good yield (>75%).

It was found that insoluble or viscous soluble dietary fibers strongly decrease dough stability and yield. Increasing hydration partly restored processing ability but usually for a limited period of time, after which yield dramatically dropped. This situation was counter-balanced by adding native whey protein concentrates, at a dosage depending on fiber type and content. The yield improvement obtained by adding this protein was higher than that obtained by increasing hydration alone.

Incorporation of dietary fibers also reduced the stack height of baked biscuit, which is well known in the prior art. Adding native whey protein concentrates together with dietary fibers allowed to counter-balance this negative effect of fibers and restore a stack height value close or even above that of the control biscuit.

Although preferred embodiments of the invention have been described herein in detail, it will be understood by those skilled in the art that variations may be made thereto without departing from the scope of the invention or of the appended claims.

**Claims**

1. A biscuit dough comprising:

   protein in an amount of at least 8wt% by weight of the final biscuit;
   fiber in an amount of from 5 to 20wt% by weight of the final biscuit;
   sugar in an amount of from 5 to 25wt% by weight of the final biscuit;
   wherein the dough comprises native whey protein in an amount of at least 0.5 wt% by weight of the dough, and wherein the fiber comprises viscous soluble fibers and/or insoluble fibers.

2. The biscuit dough according to claim 1, wherein the insoluble fibers comprise one or more of brans from cereal grains and/or fibers from fruits or vegetables; and/or wherein the viscous soluble fibers comprise one or more of guar gum, tara gum, locust bean gum, fenugreek, xanthan, pectins, alginates, beta-glucans, glucomannans, konjac and psyllium.

3. The biscuit dough according to claim 2, wherein the cereal grains are selected from wheat, oat, barley and rye, or combinations of two or more thereof.

4. The biscuit dough according to any of the preceding claims, wherein the viscous soluble fibers and/or insoluble fibers comprise from 3 to 15wt% by weight of the dough; and/or
   wherein the fiber comprises less than 2wt% non-viscous soluble fibers by weight of the final biscuit

5. The biscuit dough according to any of the preceding claims, wherein the dough comprises water in an amount of less than 25wt% by weight of the dough, preferably less than 15wt% by weight of the dough.

6. The biscuit dough according to any of the preceding claims, wherein the protein is in an amount of up to 25wt% by weight of the final biscuit, preferably about 14wt% by weight of the final biscuit

7. The biscuit dough according to any of the preceding claims, wherein the fiber is in an amount of from 10 to 16wt% by weight of the final biscuit.

8. The biscuit dough according to any of the preceding claims, wherein the native whey protein is in an amount of from 1 to 1 1wt%, preferably between 2 and 6wt% by weight of the dough.

9. The biscuit dough according to any of the preceding claims, comprising:

   (i) sugar in an amount of from 10 to 25wt% by weight of the final biscuit, preferably from 10 to 20wt%; and/or
   (ii) fat in an amount of from 5 to 25wt% by weight of the final biscuit, preferably from 10 to 20wt%; and/or
   (iii) wherein the ratio of sugar to fat by weight of the final biscuit is about 1:1.

10. A biscuit obtainable by shaping and baking the biscuit dough of any of the preceding claims, preferably wherein the biscuit has a water activity of less than 0.4.

11. A biscuit comprising:

    protein in an amount of at least 8wt% by weight;
    fiber in an amount of from 5 to 20wt% by weight;
    sugar in an amount of from 5 to 25wt% by weight of the final biscuit;
    wherein the biscuit is obtainable by shaping and baking a dough comprising native whey protein in an amount of at least 0.5 wt% by weight of the dough, and wherein the fiber comprises viscous soluble fibers and/or insoluble fibers.

12. A method for forming the biscuit dough of any of claims 1 to 9, the method comprising:

    a) providing a liquid fat ingredient in a mixer,
    b) adding dietary fibers to the liquid fat to coat the fibers;
    c) mixing flour with the fat-coated fibers to form a mixture;
    d) adding a sugar solution to the mixture to form a dough; and
    e) optionally adding inclusions to the dough;

    wherein native whey protein is introduced in step b or step c.

13. The method according to any of the preceding claims, wherein the liquid fat ingredient is provided with one or more emulsifiers and/or wherein the flour is provided with other dry powder ingredients, preferably salt, and/or sodium bicarbonate and/or sodium acid pyrophosphate.

14. The method according to claim 12 or claim 13, wherein the sugar solution comprises all of the added sugar and water in the dough, and optionally further comprises ammonium bicarbonate.

15. A method for forming a biscuit from the dough of any of claims 1 to 9, the method comprising the steps of:

    (i) shaping the dough, preferably by rotary moulding; and
    (ii) baking the shaped dough.

16. The method according to claim 15, wherein the method further comprises:

    (a) a step of applying a coating, glazing and/or filling to the biscuit; and/or
    (b) a step of packaging the cookie.

EP 2 997 827 B1

**Patentansprüche**

1. Keksteig, umfassend:

   Protein in einer Menge von mindestens 8 Gew.-% des fertigen Kekses;
   Ballaststoff in einer Menge von 5 bis 20 Gew.-% des fertigen Kekses;
   Zucker in einer Menge von 5 bis 25 Gew.-% des fertigen Kekses;
   wobei der Teig natives Molkenprotein in einer Menge von mindestens 0,5 Gew.-% des Teigs umfasst und wobei der Ballaststoff viskose lösliche Ballaststoffe und/oder unlösliche Ballaststoffe umfasst.

2. Keksteig nach Anspruch 1, wobei die unlöslichen Ballaststoffe eines oder mehrere von Kleien aus Getreidekörnern und/oder Ballaststoffen aus Obst oder Gemüse umfassen; und/oder wobei die viskosen löslichen Ballaststoffe eines oder mehrere von Guargummi, Taragummi, Johannisbrotgummi, Bockshornklee, Xanthan, Pectinen, Alginaten, Betaglucanen, Glucomannanen, Konjac und Flohsamen umfassen.

3. Keksteig nach Anspruch 2, wobei die Getreidekörner aus Weizen, Hafer, Gerste und Roggen oder Kombinationen von zwei oder mehr davon ausgewählt sind.

4. Keksteig nach einem der vorstehenden Ansprüche, wobei die viskosen löslichen Ballaststoffe und/oder unlöslichen Ballaststoffe von 3 bis 15 Gew.-% des Teigs ausmachen; und/oder wobei der Ballaststoff zu weniger als 2 Gew.-% des fertigen Kekses nichtviskose lösliche Ballaststoffe umfasst.

5. Keksteig nach einem der vorstehenden Ansprüche, wobei der Teig Wasser in einer Menge von kleiner als 25 Gew.-% des Teigs, vorzugsweise weniger als 15 Gew.-% des Teigs umfasst.

6. Keksteig nach einem der vorstehenden Ansprüche, wobei das Protein in einer Menge von bis zu 25 Gew.-% des fertigen Kekses, vorzugsweise ungefähr 14 Gew.-% des fertigen Kekses vorliegt.

7. Keksteig nach einem der vorstehenden Ansprüche, wobei der Ballaststoff in einer Menge von 10 bis 16 Gew.-% des fertigen Kekses vorliegt.

8. Keksteig nach einem der vorstehenden Ansprüche, wobei das native Molkenprotein in einer Menge von 1 bis 11 Gew.-%, vorzugsweise zwischen 2 und 6 Gew.-% des Teigs vorliegt.

9. Keksteig nach einem der vorstehenden Ansprüche, umfassend:

   (i) Zucker in einer Menge von 10 bis 25 Gew.-% des fertigen Kekses, vorzugsweise von 10 bis 20 Gew.-%; und/oder
   (ii) Fett in einer Menge von 5 bis 25 Gew.-% des fertigen Kekses, vorzugsweise von 10 bis 20 Gew.-%; und/oder
   (iii) wobei das Verhältnis von Zucker zu Fett, bezogen auf das Gewicht des fertigen Kekses, ungefähr 1:1 beträgt.

10. Keks, herstellbar durch Formen und Backen des Keksteigs nach einem der vorstehenden Ansprüche, wobei der Keks vorzugsweise eine Wasseraktivität von weniger als 0,4 aufweist.

11. Keks, umfassend:

    Protein in einer Menge von mindestens 8 Gew. -%;
    Ballaststoff in einer Menge von 5 bis 20 Gew.-%;
    Zucker in einer Menge von 5 bis 25 Gew.-% des fertigen Kekses;
    wobei der Keks durch Formen und Backen eines Teigs herstellbar ist, der natives Molkenprotein in einer Menge von mindestens 0,5 Gew.-% des Teigs umfasst und wobei der Ballaststoff viskose lösliche Ballaststoffe und/oder unlösliche Ballaststoffe umfasst.

12. Verfahren zum Bilden des Keksteigs nach einem der Ansprüche 1 bis 9, wobei das Verfahren Folgendes umfasst:

    a) Bereitstellen eines Flüssigfettbestandteils in einem Mischer,
    b) Zugeben von diätetischen Ballaststoffen zu dem Flüssigfett, um die Ballaststoffe zu beschichten;
    c) Mischen von Mehl mit den fettbeschichteten Ballaststoffen, um eine Mischung zu bilden;

d) Zugeben einer Zuckerlösung zu der Mischung, um einen Teig zu bilden; und
e) wahlweise Zugeben von Einschlüssen zu dem Teig;
wobei natives Molkenprotein in Schritt b oder Schritt c eingeführt wird.

13. Verfahren nach einem der vorstehenden Ansprüche, wobei der Flüssigfettbestandteil mit einem oder mehreren Emulgatoren versehen ist und/oder wobei das Mehl mit anderen Trockenpulverbestandteilen, vorzugsweise Salz und/oder Natriumhydrogencarbonat und/oder Dinatriumdihydrogendiphosphat, versehen wird.

14. Verfahren nach Anspruch 12 oder Anspruch 13, wobei die Zuckerlösung das Gesamte des zugesetzten Zuckers und Wassers in dem Teig umfasst und wahlweise ferner Ammoniumhydrogencarbonat umfasst.

15. Verfahren zum Bilden eines Kekses aus dem Teig nach einem der Ansprüche 1 bis 9, wobei das Verfahren die folgenden Schritte umfasst:

    (i) Formen des Teigs, vorzugsweise durch Rotationsformen; und
    (ii) Backen des geformten Teigs.

16. Verfahren nach Anspruch 15, wobei das Verfahren ferner Folgendes umfasst:

    (a) einen Schritt des Anbringens einer Beschichtung, Glasierung und/oder Füllung an die Kekse; und/oder
    (b) einen Schritt des Verpackens des Kekses.


**Revendications**

1. Pâte à biscuit comprenant :

    une protéine en une quantité d'au moins 8 % en poids, par rapport au poids du biscuit final ;
    une fibre en une quantité allant de 5 à 20 % en poids, par rapport au poids du biscuit final ;
    un sucre en une quantité allant de 5 à 25 % en poids, par rapport au poids du biscuit final ;
    dans laquelle la pâte comprend une protéine native de lactosérum en une quantité d'au moins 0,5 % en poids, par rapport au poids de la pâte, et dans laquelle la fibre comprend des fibres solubles visqueuses et/ou des fibres insolubles.

2. Pâte à biscuit selon la revendication 1, dans laquelle les fibres insolubles comprennent un ou plusieurs parmi des sons provenant de grains de céréales et/ou des fibres provenant de fruits ou de légumes ; et/ou dans laquelle les fibres solubles visqueuses comprennent un ou plusieurs parmi de la gomme de guar, de la gomme tara, de la gomme de caroube, du fenugrec, du xanthane, des pectines, des alginates, des bêta-glucanes, des glucomannanes, du konjac et du psyllium.

3. Pâte à biscuit selon la revendication 2, dans laquelle les grains de céréales sont choisis parmi le blé, l'avoine, l'orge et le seigle, ou des combinaisons de deux de ceux-ci ou plus.

4. Pâte à biscuit selon l'une quelconque des revendications précédentes, dans laquelle les fibres solubles visqueuses et/ou les fibres insolubles constituent de 3 à 15 % en poids, par rapport au poids de la pâte ; et/ou dans laquelle la fibre comprend moins de 2 % en poids de fibres solubles non visqueuses, par rapport au poids du biscuit final

5. Pâte à biscuit selon l'une quelconque des revendications précédentes, dans laquelle la pâte comprend de l'eau en une quantité inférieure à 25 % en poids, par rapport au poids de la pâte, de préférence inférieure à 15 % en poids, par rapport au poids de la pâte.

6. Pâte à biscuit selon l'une quelconque des revendications précédentes, dans laquelle la protéine est en une quantité allant jusqu'à 25 % en poids, par rapport au poids du biscuit final, de préférence environ 14 % en poids, par rapport au poids du biscuit final

7. Pâte à biscuit selon l'une quelconque des revendications précédentes, dans laquelle la fibre est en une quantité allant de 10 à 16 % en poids, par rapport au poids du biscuit final.

**8.** Pâte à biscuit selon l'une quelconque des revendications précédentes, dans laquelle la protéine native de lactosérum est en une quantité allant de 1 à 11 % en poids, de préférence entre 2 et 6 % en poids, par rapport au poids de la pâte.

**9.** Pâte à biscuit selon l'une quelconque des revendications précédentes, comprenant :

(i) du sucre en une quantité allant de 10 à 25 % en poids, par rapport au poids du biscuit final, de préférence de 10 à 20 % en poids ; et/ou

(ii) de la matière grasse en une quantité allant de 5 à 25 % en poids, par rapport au poids du biscuit final, de préférence de 10 à 20 % en poids ; et/ou

(iii) dans laquelle le rapport du sucre à la matière grasse, par rapport au poids du biscuit final est d'environ 1:1.

**10.** Biscuit pouvant être obtenu par mise en forme et cuisson de la pâte à biscuit selon l'une quelconque des revendications précédentes, de préférence dans lequel le biscuit a une activité de l'eau inférieure à 0,4.

**11.** Biscuit comprenant :

une protéine en une quantité d'au moins 8 % en poids, par rapport au poids ;
une fibre en une quantité allant de 5 à 20 % en poids, par rapport au poids ;
un sucre en une quantité allant de 5 à 25 % en poids, par rapport au poids du biscuit final ;
dans lequel le biscuit peut être obtenu par mise en forme et cuisson d'une pâte comprenant une protéine native de lactosérum en une quantité d'au moins 0,5 % en poids, par rapport au poids de la pâte, et dans lequel la fibre comprend des fibres solubles visqueuses et/ou des fibres insolubles.

**12.** Procédé de formation de la pâte à biscuit selon l'une quelconque des revendications 1 à 9, le procédé comprenant :

a) la fourniture d'un ingrédient matière grasse liquide dans un mélangeur,
b) l'ajout de fibres diététiques à la matière grasse liquide pour enrober les fibres ;
c) le mélange de farine avec les fibres enrobées de matière grasse pour former un mélange ;
d) l'ajout d'une solution de sucre au mélange pour former une pâte ; et
e) l'ajout éventuel d'inclusions à la pâte ;

dans lequel de la protéine native de lactosérum est introduite à l'étape b ou à l'étape c.

**13.** Procédé selon l'une quelconque des revendications précédentes, dans lequel l'ingrédient matière grasse liquide comporte un ou plusieurs émulsifiants et/ou dans lequel la farine comporte d'autres ingrédients secs en poudre, de préférence du sel, et/ou du bicarbonate de sodium et/ou du pyrophosphate acide de sodium.

**14.** Procédé selon la revendication 12 ou la revendication 13, dans lequel la solution de sucre comprend la totalité du sucre et de l'eau ajoutés dans la pâte, et comprend éventuellement en outre du bicarbonate d'ammonium.

**15.** Procédé de formation d'un biscuit à partir de la pâte selon l'une quelconque des revendications 1 à 9, le procédé comprenant les étapes consistant à :

(i) mettre en forme la pâte, de préférence par moulage rotatif ; et
(ii) cuire la pâte mise en forme.

**16.** Procédé selon la revendication 15, dans lequel le procédé comprend en outre :

(a) une étape d'application d'un enrobage, d'un glaçage et/ou d'un fourrage au biscuit ; et/ou
(b) une étape d'emballage du biscuit sucré.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6610347 B1
- WO 2010046492 A

- EP 2255663 A

**Non-patent literature cited in the description**

- **R.S. MANOHAR ; P.H. RAO.** *Eur. Food Res. Technol.,* 1999, vol. 210, 43-48